# EUROPÄISCHE PATENTSCHRIFT

(11) **EP 1 681 476 B1**
(45) Veröffentlichungstag und Bekanntmachung des Hinweises auf die Patenterteilung: **27.02.2008**
(21) Anmeldenummer: 06000683.0
(22) Anmeldetag: 13.01.2006
(51) Int. Cl.: F16B 21/09

(54) **Befestigungsanordnung für ein Bauteil an einer Wand**
Attachment arrangement for a construction unit at a wall
Disposition de fixation pour un élément à une paroi

(30) Priorität: 15.01.2005 DE 102005002021
(43) Veröffentlichungstag der Anmeldung: 19.07.2006
(73) Patentinhaber: GM Global Technology Operations, Inc., Detroit, MI 48265-3000 (US)
(72) Erfinder: Pakzadeh, Hossein, 65193 Wiesbaden (DE)

(56) Entgegenhaltungen:
- US-A- 6 142 435
- US-B1- 6 209 827

## Beschreibung

Die Erfindung bezieht sich auf eine Befestigungsanordnung eines Bauteils an einer Wand, insbesondere einer Dünnblechwand eines Kraftfahrzeugs, die eine schlüssellochförmige Öffnung aufweist, durch deren ersten Abschnitt eine am Bauteil überstehend angeordnete Schraube mit ihrem Schraubenkopf hindurchführbar ist und deren zweiter Abschnitt randseitig den eingesetzten Schraubenkopf hintergreift, wobei am Bauteil ein Sicherungselement vorgesehen ist.

Es ist bekannt, an einer Wand, beispielsweise einem Karosserieteil eines Kraftfahrzeugs, ein beliebiges Bauteil, wie z. B. einen Sensor, während der Montage des Kraftfahrzeugs von einem Monteur zu befestigen. Dies kann u. a. in einer Überkopfposition oder in einem Hohlraum der Karosserie erfolgen, wodurch der Montageort des Bauteils an der Wand eventuell vom Monteur nicht einsehbar ist. Daher muss die Befestigungsanordnung, umfassend das Bauteil sowie die zugehörige Wand zur Festlegung des Bauteils, derart ausgebildet sein, dass eine fehlerfreie Montage nur in einer lagerichtigen Position des Bauteils möglich ist. Dies ist z. B. bei einem Beschleunigungssensor notwendig, der nur in einer Richtung eine Beschleunigung erfassen kann. Wird dieser Beschleunigungssensor beispielsweise um 90° verdreht an einer bestimmten Stelle im Kraftfahrzeug eingebaut, kann überhaupt keine Beschleunigung erfasst werden.

Das Bauteil ist mit einer Schraube, die dem Bauteil zugeordnet und in ein mit einem entsprechenden Gewinde ausgebildeten Sackloch im Bauteil eingeschraubt ist, versehen. Die Schraube steht vor der Montage des Bauteils über dieses über und der Schraubenkopf ist zur Montage durch einen ersten Abschnitt einer schlüssellochförmigen Öffnung der Wand hindurchführbar. An diesen ersten Abschnitt schließt sich ein zweiter langlochförmiger Abschnitt der Öffnung an, der derart schmal ausgeführt ist, dass lediglich der Schaft der Schraube in diesen zweiten Abschnitt einführbar ist und der Rand des zweiten Abschnitts den Schraubenkopf oder eine auf der Schraube angeordnete Unterlegscheibe hintergreift. Anschließend wird die Schraube beispielsweise mit einem entsprechenden Schraubendreher oder Schlüssel angezogen, um das Bauteil in der gewünschten Position an der Wand zu fixieren.

Die DE 297 14 824 U1 beschreibt eine Befestigungsanordnung aus einem zu befestigenden Bauteil und einem zweiten Bauteil, wobei dem zu befestigenden Bauteil eine Schraube zugeordnet ist, die an dem dem Schraubenkopf gegenüberliegenden Ende des Schaftes derart ausgebildet ist, dass hier beispielsweise ein Schraubendreher oder ein Innen- oder Außensechskant in Eingriff gebracht werden kann. Somit ist es möglich, das Bauteil mit dem überstehenden Schraubenkopf in an sich bekannter Weise an einer Wand eines Karosserieteils, insbesondere eines Karosserieholms, von außen zu befestigen und dennoch die Schraube anziehen zu können, da dieses Anziehen vom Schaftende der Schraube her erfolgt. Es versteht sich, dass hierzu das Bauteil mit einem Durchgriff für die Schraube versehen ist, um das dem Schraubenkopf gegenüberliegende Ende des Schaftes zugänglich zu machen.

Die DE 198 46 793 A1 offenbart ein an einer Wand aus Dünnblech zu befestigendes elektronisches Bauelement für Kraftfahrzeuge, wobei eine Schraube in eine schlüssellochförmige Öffnung mit zwei Abschnitten eingesetzt wird. Zur Fixierung des Bauteils in der Öffnung dient ein zusätzliches Sicherungselement, mit dem das Bauteil exakt positionierbar ist. Dies ist jedoch insofern nachteilig, als sich bei der Montage des Bauteils das Sicherungselement vom Bauelement löst und im Bereich des ersten Abschnitts der Öffnung verbleibt. Somit muss dieses Sicherungselement aufwendig ausgeführt sein, um trotz des Lösens vom Bauteil die exakte Positionierung zu gewährleisten.

Ferner zeigt die US-A-6 142 435 eine Befestigungseinrichtung eines Bauteils an einer Wand, die eine schlüssellochförmige Öffnung aufweist. Das Bauteil ist mit einem Ansatz mit seitlichen Flächen ausgestattet, der verdrehsicher in den langlochförmigen Abschnitt der schlüssellochförmigen Öffnung eingreift, wobei umfangsseitige Überstände eines an dem freien Ende des Absatzes ausgebildeten knopfartigen Kopfes und ein dem Kopf gegenüberliegendes Federelement für eine unverlierbare Halterung in dem langlochförmigen Abschnitt der schlüssellochförmigen Öffnung sorgen. An einem von dem Bauteil entfernt angeordneten Ende des Federelementes befindet sich eine in Richtung des Kopfes weisende Nase, die in der montierten Endlagenposition des Bauteils in den gegenüber dem langlochförmigen Abschnitt vergrößerten Einführabschnitt der schlüssellochförmigen Öffnung eingreift, um ein Lösen bzw. Verschieben des Bauteils zu verhindern.

Der Erfindung liegt die Aufgabe zugrunde, eine Befestigungsanordnung für ein Bauteil an einer Wand der eingangs genannten zu schaffen, die eine lagerichtige

Montage des Bauteils an der Wand sicherstellt und einfach aufgebaut ist.

Erfindungsgemäß wird die Aufgabe dadurch gelöst, dass das Sicherungselement eine mit dem Bauteil verbundene elastische Feder ist, die mit einem Rastvorsprung im Bereich der Öffnung in der Wand zusammenwirkt.

Der Kerngedanke der Erfindung besteht darin, dass mit dem Bauteil eine Feder fest verbunden ist, wobei die blattfederartige Feder in einer Position relativ zum Bauteil an diesem fixiert ist. Z. B. ist es möglich, die Feder mit einer Ausnehmung zu versehen, durch die die Schraube zur Befestigung des Bauteils an der Wand hindurchgeführt ist, um die Feder am Bauteil in der gewünschten Position zu fixieren. Diese Feder wirkt mit einem Rastvorsprung im Bereich der schlüssellochförmigen Öffnung in der Wand zusammen, die gewährleistet, das Bauteil bzw. den überstehenden Schraubenkopf nur auf eine bestimmte Art und Weise in die Öffnung bzw. deren ersten Abschnitt einzuführen. Die Position des Rastvorsprungs ist in Bezug auf die Feder derart gewählt, dass das Bauteil erst dann mit dem Schaft der Schraube in den zweiten Abschnitt der Öffnung einführbar ist, wenn die Feder, die vorzugsweise über eine Rastnase verfügt, den an der Wand ausgebildeten Rastvorsprung überwunden hat. Hierfür muss die Feder entgegen ihrer Federelastizität geringfügig verformt oder verbogen werden, um das Überwinden dieses Rastvorsprungs an der Wand zu ermöglichen. Der vom Monteur aufzubringende notwendige Kraftaufwand ist bei der Montage vernachlässigbar gering. Prinzipiell können auch mehrere Rastvorsprünge vorgesehen sein, die mit der Feder zusammenwirken. Ebenso können an dem Bauteil mehrere Federn angeordnet sein, die jeweils mit einem oder mehreren Rastvorsprüngen zusammenwirken.

Vorzugsweise sind die Feder sowie der Schraubenkopf bzw. eine ihm zugeordnete Unterlegscheibe derart ausgestaltet, dass im zusammengesetzten Zustand die Öffnung in der Wand im Wesentlichen vollständig abgedeckt ist.

Im Rahmen der Erfindung kann der Rastvorsprung an der Wand in an sich beliebiger Weise ausgebildet sein, bevorzugt jedoch wie im Folgenden beschrieben. Prinzipiell ist es möglich, den Rastvorsprung nachträglich auf die Wand aufzubringen, z. B. durch das Ankleben oder Anschweißen eines entsprechend ausgebildeten Metallstücks.

Es versteht sich, dass mit dieser Befestigungsanordnung an sich beliebige Bauteile oder Komponenten aneinander befestigbar sind. Bevorzugt findet diese Befestigungsanordnung aber bei der Montage von Kraftfahrzeugen Verwendung, um insbesondere die im Folgenden beschriebenen Sensoren an Teilen der Karosserie des Kraftfahrzeugs zu befestigen.

Der Vorteil der Erfindung liegt darin, mit einfachen Mitteln die lagerichtige Montage eines Bauteils an einer Wand zu gewährleisten, wobei durch das Überwinden des Rastvorsprungs, das bei der Montage einen geringfügigen Kraftaufwand erfordert, dem Monteur haptisch angezeigt wird, dass das Bauteil nunmehr in seiner Endposition ist und die Schraube angezogen werden kann.

Bevorzugt ist das Bauteil ein elektronisches Bauteil, insbesondere ein Airbagsensor zur Erfassung von Beschleunigungskräften, denen ein Kraftfahrzeug ausgesetzt ist. Mit der Feder und dem ihr zugeordneten Rastvorsprung ist die lagerichtige Montage des Airbagsensors an der Karosserie des Kraftfahrzeugs sichergestellt, wodurch die Beschleunigungen in den vom Konstrukteur gewünschten Richtungen korrekt überwacht werden können.

Prinzipiell kann das Bauteil an allen Arten von Wänden oder sonstigen Flächen befestigt werden. Zweckmä-ßigerweise ist die Wand ein Teil einer Kraftfahrzeugkarosserie, um an dieser beliebige Komponenten eines Kraftfahrzeugs zu befestigen.

Um ein Bauteil auch an einen Holm oder Träger oder an einem sonstigen hohlen oder von der Rückseite nur schwer zugänglichen Wandabschnitt zu befestigen, ist die Schraube derart ausgebildet, dass an beiden Enden ein Werkzeug mit der Schraube zusammenwirken kann, beispielsweise ein Schraubendreher oder ein Innen- oder Außensechskant. Hierfür durchgreift die Schraube das Bauteil, um auf das dem Schraubenkopf gegenüberliegende Ende der Schraube bzw. des Schaftes ebenfalls mit einem Werkzeug zugreifen zu können.

In Ausgestaltung ist der Rastvorsprung durch eine Verprägung gebildet. Diese kann bei einem Pressvorgang des Karosserieteils, beispielsweise eines Kotflügels, in einfacher Weise im Bereich der Öffnung erzeugt werden. Hierbei ist es dem Fachmann möglich, das Stanz- oder Presswerkzeug entsprechend auszubilden. Die Verprägung kann beliebige Formgebungen aufweisen, beispielsweise rund, rechteckig, quaderförmig, halbkugelig oder pyramidenförmig. Je nach Form und Größe der Öffnung und der Ausgestaltung der Feder sowie des Schraubenkopfes am Bauteil kann die Verprägung rund um die Öffnung in der Wand angeordnet werden, um mit der Feder bzw. ihrer Rastnase zusammenzuwirken.

Um das lagerichtige Einsetzen des Bauteils bzw. des Schraubenkopfes in die Öffnung zu erreichen, ist der Rastvorsprung in Verlängerung der länglichen Öffnung angeordnet, insbesondere an der Seite des ersten Abschnitts, durch den der Schraubenkopf eingeführt wird. Zweckmäßigerweise ist der Rastvorsprung als eine Sicke einer freigestanzten Zunge der Wand ausgebildet. Somit muss bei der Montage des Bauteils an der Wand zuerst der Schraubenkopf durch den größeren ersten Abschnitt der Öffnung eingeführt werden, wobei die ebenfalls am Bauteil angeordnete Feder derart ausgeformt ist, dass sie zunächst mit der an der Feder ausgebildeten Rastnase, in Blickrichtung von der Öffnung zum Rastvorsprung an der Wand gesehen, hinter diesem Rastvorsprung positioniert wird. Wird nunmehr das Bauteil mit dem Schaft der Schraube in den langlochförmigen zweiten Abschnitt der Öffnung verschoben, kommt die Feder an dem Rastvorsprung an der Wand zur Anlage und wird entgegen ihrer Federkraft geringfügig verformt, bis die Feder über dem Rastvorsprung quasi hinwegspringt und das Bauteil somit in der Öffnung lagerichtig eingesetzt ist. Gegebenenfalls kann hierbei die Feder auch derart ausgebildet sein, dass das Bauteil mit Hilfe der Feder in der Öffnung verrastet ist.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand zweier Ausführungsbeispiele unter Bezugnahme auf die zugehörigen Zeichnungen näher erläutert. Es zeigt:
- Fig. 1: eine Darstellung eines erfindungsgemäßen Bauteils mit einer Feder im Querschnitt,
- Fig. 2: eine perspektivische Darstellung des Bauteils nach Fig. 1 an einer Wand
- Fig. 3: eine Darstellung der Wand nach Fig. 2 und
- Fig. 4: eine Darstellung der Wand nach Fig. 2 in alternativer Ausgestaltung und
- Fig. 5: eine Schnittdarstellung der Wand nach Fig. 4.

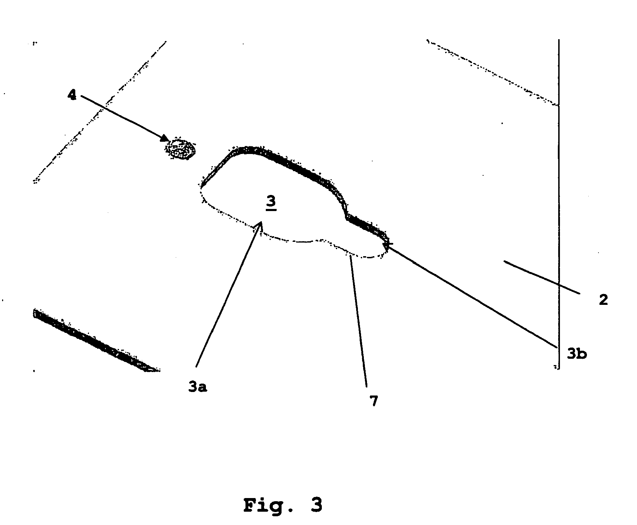

Bei dem Bauteil 1 handelt es sich um einen Airbagsensor zur Steuerung eines Airbags in einem Kraftfahrzeug, der an einer Wand 2, insbesondere einer Karosserie eines Kraftfahrzeugs, montiert wird. Hierzu verfügt die Wand 2, wie aus Fig. 3 ersichtlich, über eine schlüssellochförmige Öffnung 3 mit einem ersten Abschnitt 3a und einem zweiten langlochförmigen Abschnitt 3b.

Benachbart zu der Öffnung 3, insbesondere in der Verlängerung der länglich ausgebildeten Öffnung 3 über den ersten Abschnitt 3a, ist ein Rastvorsprung 4 in der Wand 2 ausgebildet und zwar in der Form einer Verprägung, d. h. einer beispielsweise in einem Stanz- oder Pressvorgang erzeugten Materialerhebung des metallischen Karosseriebauteils.

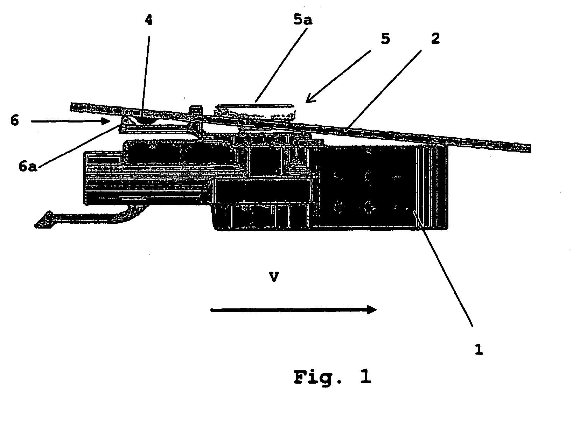

Der Darstellung nach Fig. 1 lässt sich der prinzipielle Aufbau der aus dem Bauteil 1 und der Wand 2 bestehenden Befestigungsanordnung entnehmen. Das Bauteil 1 ist mit einer Schraube 5 versehen, die einen Schraubenkopf 5a bzw. eine dem Schraubenkopf 5a zugeordnete Unterlegscheibe aufweist. Der nicht dargestellte Schaft der Schraube 5 bzw. der zweite Abschnitt 3b der Öffnung 3 ist derart dimensioniert, dass der Schaft in den Abschnitt 3b einführbar ist, wodurch ein Rand 7 um den Abschnitt 3b den Schraubenkopf 5a hintergreift.

Zur Montage des Bauteils 1 an der Wand 2 wird zuerst der Schraubenkopf 5a durch den ersten größer dimensionierten Abschnitt 3a der Öffnung 3 in der Wand 2 hindurch gesteckt. Hierbei ist die zusätzlich am Bauteil 1 angeordnete Feder 6, die vorzugsweise aus einem federelastischen Metall besteht, derart ausgebildet, dass die Feder 6 bzw. eine an der Feder 6 angeformte Rastnase 6a den Rastvorsprung 4 bzw. die Verprägung an der Wand 2 hintergreift.

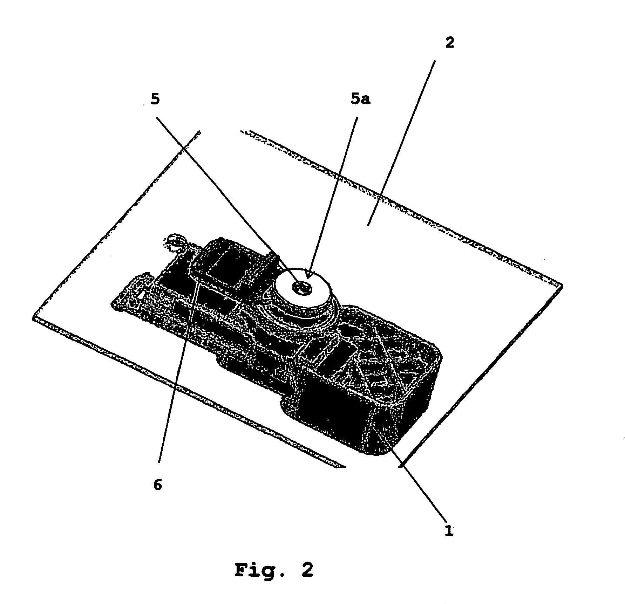

Wird nun, wie durch den Pfeil V in Fig. 1 angedeutet, das Bauteil 1 in seine Endposition verlagert, d. h. der Schaft der Schraube 5 in den langlochartigen Abschnitt 3b der Öffnung 3 eingeführt, kommt die Feder 6 bzw. ihre einstückig mit ihr ausgebildete hakenförmige Rastnase 6a an dem Rastvorsprung 4 zur Anlage. Wird nun das Bauteil 1 weiterbewegt, dann wird die Feder 6 geringfügig verformt bzw. verbogen und springt über den Rastvorsprung 4 an der Wand. Hierbei sind die Feder 6 sowie die Öffnung 3 insbesondere derart ausgebildet, dass das Bauteil 1 bzw. der Schaft der Schraube 5 in der Endposition eingerastet ist. Anschließend kann die Schraube 5 beispielsweise mit einem Schraubendreher angezogen werden, wodurch die Wand 2 zwischen dem Bauteil 1 und dem Schraubenkopf 5 eingeklemmt ist. Dies ist in Fig. 2 dargestellt, wobei die Wand 2 semitransparent ausgebildet ist, so dass durch sie hindurch das darunter liegende Bauteil 1 sichtbar ist.

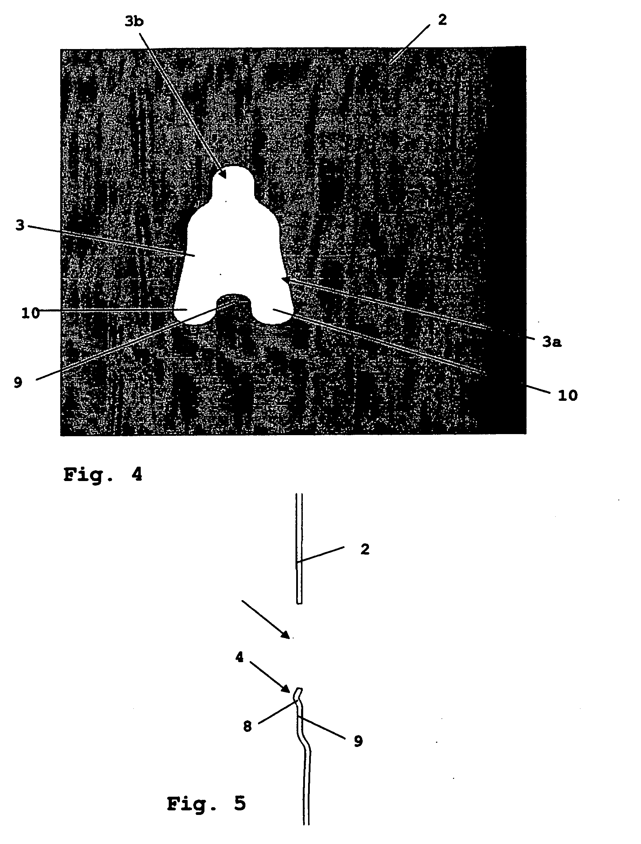

Gemäß den Fig. 4 und 5 ist der Rastvorsprung 4 als eine Sicke 8 einer freigestanzten Zunge 9 der Wand 2 ausgebildet. Die beiderseits der Zunge 9 vorhandenen Freistanzungen 10 verbreitern den ersten Abschnitt 3a der Öffnung in Richtung der Zunge 9 und gewährleisten eine verhältnismäßig einfache Fertigung der Sicke 8 aufgrund des vorhandenen Freiraums in der Wand 2.

Die Schraube 5 kann auch derart ausgebildet sein, dass sie das Bauteil 1 durch eine entsprechende Ausnehmung durchgreift und an ihrem anderen Ende mit einem Werkzeug auf die Schraube 5 zugegriffen wird. Dies bietet sich an, falls der Schraubenkopf 5a beispielsweise im Inneren eines Holms oder Trägers einer Fahrzeugkarosserie angeordnet ist und auf den Schraubenkopf 5a nicht mehr zugegriffen werden kann.

### Bezugszeichenliste

- 1.: Bauteil
- 2.: Wand
- 3.: Öffnung
- 3a.: erster Abschnitt
- 3b.: zweiter Abschnitt
- 4.: Rastvorsprung
- 5.: Schraube
- 5a.: Schraubenkopf
- 6.: Feder
- 6a.: Rastnase
- 7.: Rand
- 8.: Sicke
- 9.: Zunge
- 10.: Freistanzung

- V: Pfeil

## Patentansprüche

1. Befestigungsanordnung eines Bauteils (1) an einer Wand (2), insbesondere einer Dünnblechwand eines Kraftfahrzeugs, die eine schlüssellochförmige Öffnung (3) aufweist, durch deren ersten Abschnitt (3a) eine am Bauteil (1) überstehend angeordnete Schraube (5) mit ihrem Schraubenkopf (5a) hindurchführbar ist und deren zweiter Abschnitt (3b) randseitig den eingesetzten Schraubenkopf (5a) hintergreift, wobei am Bauteil (1) ein Sicherungselement vorgesehen ist, **dadurch gekennzeichnet, dass** das Sicherungselement eine mit dem Bauteil (1) verbundene elastische Feder (6) ist, die mit einem Rastvorsprung (4) im Bereich der Öffnung (3) in der Wand (2) zusammenwirkt.

2. Befestigungsanordnung nach Anspruch 1, **dadurch gekennzeichnet, dass** das Bauteil (1) ein elektronisches Bauteil ist, insbesondere ein Airbagsensor.

3. Befestigungsanordnung nach Anspruch 1 oder 2, **dadurch gekennzeichnet, dass** die Wand (2) ein Teil einer Kraftfahrzeugkarosserie ist.

4. Befestigungsanordnung nach einem der Ansprüche 1 bis 3, **dadurch gekennzeichnet, dass** die Schraube (5) an beiden Enden zum Ansatz eines Werkzeuges ausgebildet ist.

5. Befestigungsanordnung nach einem der Ansprüche 1 bis 4, **dadurch gekennzeichnet, dass** der Rastvorsprung (4) eine Verprägung ist.

6. Befestigungsanordnung nach einem der Ansprüche 1 bis 5, **dadurch gekennzeichnet, dass** der Rastvorsprung (4) in Verlängerung der Öffnung (3, insbesondere vom zweiten Abschnitt (3b) aus gesehen hinter dem ersten Abschnitt (3a)) angeordnet ist.

7. Befestigungsanordnung nach einem der Ansprüche 1 bis 6, **dadurch gekennzeichnet, dass** der Rastvorsprung (4) als eine Sicke (8) einer freigestanzten Zunge (9) der Wand (2) ausgebildet ist.

## Claims

1. Fastening arrangement of a component (1) to a wall (2), in particular a thin sheet metal wall of a motor vehicle, which comprises a keyhole-shaped opening (3) through the first portion (3a) of which a screw (5), which is disposed in a protruding manner on the component (1), can be passed with its screw head (5a) and the second portion (3b) of which engages behind the inserted screw head (5a) at the edge, wherein a securing element is provided on the component (1), **characterised in that** the securing element is a resilient spring (6) which is connected to the component (1) and cooperates with a locking projection (4) in the region of the opening (3) in the wall (2).

2. Fastening arrangement according to Claim 1, **characterised in that** the component (1) is an electronic component, in particular an airbag sensor.

3. Fastening arrangement according to Claim 1 or 2, **characterised in that** the wall (2) is a part of a vehicle body.

4. Fastening arrangement according to any one of Claims 1 to 3, **characterised in that** the screw (5) is formed at both ends for the application of a tool.

5. Fastening arrangement according to any one of Claims 1 to 4, **characterised in that** the locking projection (4) is an embossing.

6. Fastening arrangement according to any one of Claims 1 to 5, **characterised in that** the locking projection (4) is disposed in an extension of the opening (3), in particular at the far side of the first portion (3a), viewed from the second portion (3b).

7. Fastening arrangement according to any one of Claims 1 to 6, **characterised in that** the locking projection (4) is formed as a bead (8) of a stamped-out tongue (9) of the wall (2).

## Revendications

1. Dispositif de fixation pour un élément (1) sur une paroi (2), en particulier une paroi en tôle mince d'un véhicule automobile, présentant une ouverture (3) en forme de trou de serrure, à travers le premier tronçon (3a) de laquelle une vis (5), disposée en ressortant de l'élément (1), peut être passée par sa tête de vis (5a), et dont le deuxième tronçon (3b) saisit par l'arrière en bordure la tête de vis (5a) insérée, dans lequel un élément de sécurité est prévu sur l'élément (1), **caractérisé en ce que** l'élément de sécurité est une languette (6) élastique, reliée à l'élément (1) et coopérant avec une saillie d'encliquetage (4) dans la zone de l'ouverture (3) dans la paroi (2).

2. Dispositif de fixation selon la revendication 1, **caractérisé en ce que** l'élément (1) est un composant électronique, en particulier un capteur de sac gonflable de sécurité.

3. Dispositif de fixation selon la revendication 1 ou 2, **caractérisé en ce que** la paroi (2) est une partie d'une carrosserie de véhicule automobile.

4. Dispositif de fixation selon l'une des revendications 1 à 3, **caractérisé en ce que** la vis (5) est réalisée aux deux extrémités pour l'application d'un outil.

5. Dispositif de fixation selon l'une des revendications 1 à 4, **caractérisé en ce que** la saillie d'encliquetage (4) est une déformation.

6. Dispositif de fixation selon l'une des revendications 1 à 5, **caractérisé en ce que** la saillie d'encliquetage (4) est disposée dans le prolongement de l'ouverture (3 ; derrière le premier tronçon (3a), en observant en particulier depuis le deuxième tronçon (3b)).

7. Dispositif de fixation selon l'une des revendications 1 à 6, **caractérisé en ce que** la saillie d'encliquetage (4) est réalisée sous la forme d'une nervure (8) d'une languette (9), obtenue par découpage par estampage, de la paroi (2).
